# EUROPEAN PATENT SPECIFICATION

(11) **EP 4 488 080 B1**
(45) Date of publication and mention of the grant of the patent: **22.07.2026**
(21) Application number: 24215847.5
(22) Date of filing: 28.02.2022
(51) Int. Cl.: B60C 25/01, B60C 25/02, B60C 25/04

(54) **A TOOL**
WERKZEUG
OUTIL

(30) Priority: 27.04.2021 GB 202105973
(43) Date of publication of application: 08.01.2025
(62) Divisional of application: 22707835.9
(73) Proprietor: Baker, Kevin James, Penallta Hengoed Mid Glamorgan CF82 6GX (GB)
(72) Inventor: Baker, Kevin James, Penallta Hengoed Mid Glamorgan CF82 6GX (GB)
(74) Representative: Wynne-Jones IP Limited

(56) References cited:
- DE-C- 200 499
- US-A- 1 320 829
- US-A1- 2013 192 767
- US-A1- 2018 290 508
- US-B1- 7 556 078

## Description

The present invention relates to tools for installing bicycle tyres on bicycle wheel rims and/or removing bicycle tyres from bicycle wheel rims.

### Background

Installing bicycle tyres on and removing bicycle tyres from wheel rims is an essential aspect of bicycle maintenance and repair. Depending on the type of tyre and wheel rim utilised, the ease with which a tyre can be installed on or removed from the wheel rim can vary greatly depending on how tightly the tyre fits on the wheel rim. Where a tyre is, or is to be, mounted tightly on a wheel rim, it may be necessary to employ a tool, such as a tyre lever, to aid a user in lifting the tyre bead and corresponding section of the tyre side wall over the wheel rim during installation or removal of the tyre.

It is very well known to use a tyre lever to facilitate the installation of a tyre on a wheel rim and to allow the removal of a tyre from a wheel rim. When installing the tyre, a tyre lever may be used to ease the tyre over the side wall of wheel rim. During removal of the tyre, the lever may be placed between a wheel rim and tyre bead in use, with pressure being applied to the tyre lever to lift the corresponding section of the tyre bead and tyre wall away from the wheel rim, an example is disclosed in WO9813221.

US9656524 discloses a further example of a tyre lever for removing and installing bicycle tyres. The tyre lever comprises a first hook for removing a tyre and a second hook for installing a tyre. The tool may be moved circumferentially around the wheel rim in use, with the length of the tool being orientated generally radially with respect to the wheel.

US2018/290508A1 discloses a tyre assembling device which includes a main body, a holding portion, an abutting surface, a guiding portion, a pressing portion and a protrusion. The main body has a top surface. The holding portion is connected to one side of the main body. The abutting surface is connected to another side of the main body is for abutting against a rim surface of the rim. The guiding portion located between the abutting surface and the top surface is extended inclinedly corresponding to a radial direction of the rim. The pressing portion extended from the guiding portion toward a reference direction is protruded from the abutting surface and connected to the top surface. The protrusion protruded from the pressing portion forms a hook portion with an upper edge of the pressing portion and the abutting surface. The hook portion is for hooking a first edge of the rim.

US2013/192767A1 discloses a unitary structure tyre lever which has an opening for a user to insert fingers and grab the lever when installing and removing a tyre from a rim. The lever has a curved smooth installation hook at one end with a ridge to engage a lip of a tyre rim during tyre installation. The lever also has a curved smooth removal hook at the other end with a notch that enables the lever to pivot about the lip of the tyre rim during tyre removal. The removal hook also has a curved seat portion that engages with a bead of the tyre during tyre removal.

US7556078B1 discloses a tool for completing the mounting of a bicycle tyre onto its rim. The use of a tool is usually required to complete the job of mounting a bicycle tyre to its rim due to the high tension developed in the bead of the tyre at that stage. The tool employs a traveling inclined plane to progressively lift the tyre bead to a height above an edge of the wheel rim, and a downwardly sloped incline to allow the so lifted bead to then slide down into the rim's interior. The tool utilizes the flange, or rim sidewall, of the wheel rim for both support and guidance as it is impelled forward on the rim by impacts on its trailing surface from an object suitable for the function, such as a hammer.

Known bicycle tyre levers are generally elongate, with the length of the tyre lever extending radially towards the centre of the bicycle wheel in use. Such levers comprise a relatively narrow hook or lever section which is positioned between a tyre and a wheel rim in use. Where a tyre is fitted tightly on a wheel rim, it may be necessary to use a series of tyre levers to ease the tyre onto or away from the wheel rim. If a tyre lever is narrow, the pressure exerted on or by the tyre lever when it is located between the tyre and the wheel rim may make it difficult to move the tyre lever circumferentially around the wheel rim to ease the tyre either onto or away from the wheel rim, and in some cases may result in damage to the wheel rim.

Accordingly, it is an object of the invention to alleviate the disadvantages of the prior art.

### Summary of invention

A tool for installing a tyre on a wheel rim, the tool comprising:
a body;
a wing extending from an upper portion of the body to form an overhang over a side of the body, such that the side of the body and an underside of the wing form an open channel for receiving in use an outer peripheral portion of a wall of the wheel rim, the channel extending between a forward portion and a rearward portion of the body;
the wing comprising a leading edge and an upper side which are arranged to engage in use with a side wall of the tyre;
wherein the leading edge of the wing is swept toward the rearward portion of the body and the upper side of the wing is curved about an axis which extends substantially along the channel, to form a convex profile, characterised in that the tool further comprises a flange for removal of a tyre from a wheel rim, wherein the flange extends substantially perpendicularly to the body.

A radius of curvature of the upper side of the wing about the axis may increase from the leading edge toward a trailing edge of the wing.

The tool may further comprise guiding means disposed upon the upper portion of the body for guiding the side wall of the tyre upon the wing.

The guiding means may be disposed along the body between the wing and the forward portion of the body. The guiding means may comprise a ramped protuberance formed upon the upper portion for lifting the side wall of the tyre upon the wing.

The tool may further comprise an abutment surface for engaging with the side wall of the tyre and deflecting the side wall of the tyre upon the upper side of the wing. The abutment surface may comprise a quarter sphere.

The flange may extend from the side of the body opposite the side from which the wing extends. The flange may be located proximate the rearward portion of the body. The flange may extend between the upper portion and a lower portion of the body. The width of the flange may be 20-60mm, preferably 30-50mm or more preferably 40-50mm.

In a second aspect of the invention, there is provided a tool for removal or a tyre from a wheel rim, the tool comprising a body and a flange extending from a side of the body and extending substantially perpendicularly to the body.

The width of the flange may be 20-60mm, preferably 30-50mm or more preferably 40-50mm.

### Brief description of drawings

Figure 1 is a first perspective view of a tool according to an embodiment of the present invention.
Figure 2 is a second perspective view of the tool of Figure 1.
Figure 3 is a view of a first side of the tool of Figure 1.
Figure 4 is a view of a second side of the tool of Figure 1.
Figure 5 is the tool of Figure 1 as viewed from above.
Figure 6 is the tool of Figure 1 as viewed from below.
Figure 7 is a side view from the forward portion of the tool of Figure 1.
Figure 8 is a side view from the rearward portion of the tool of Figure 1.
Figure 9 is a back view of the tool of Figure 1 in use during installation of a tyre on a wheel rim.
Figure 10 shows the tool of Figure 1 in use during removal of a tyre from a wheel rim.

### Detailed description

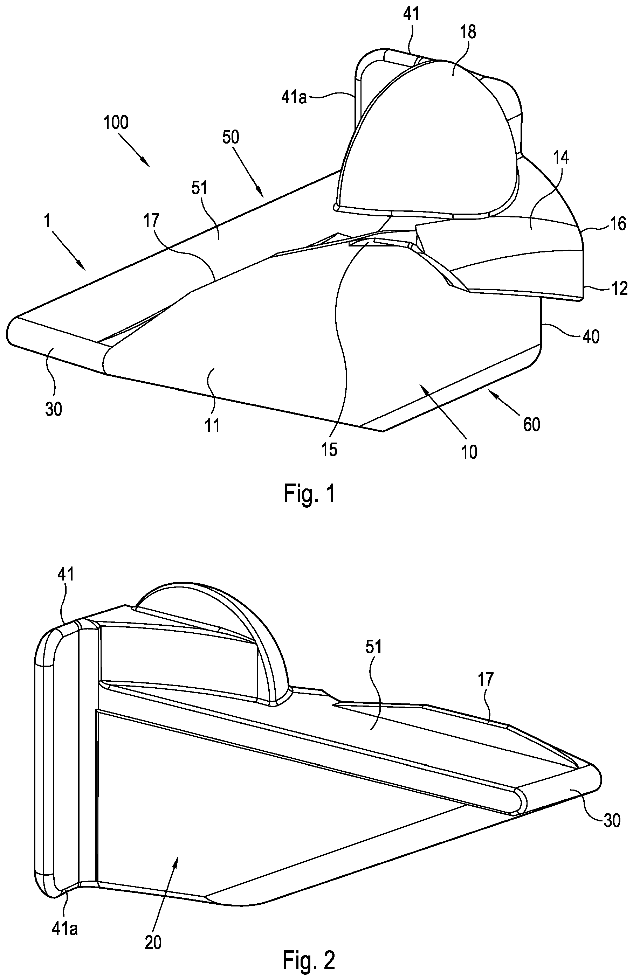

Referring to Figures 1-10, there is shown a tool according to an embodiment of the present invention.

The tool 100 comprises a body 1 comprising a first side 10, a second side 20, a forward portion 30, a rearward portion 40, an upper portion 50 and a lower portion 60, in use. The tool 100 may be made from any material of suitable strength, for example plastics material or metal.

In the illustrated embodiment, the body 1 is generally elongate, and the first side 10 comprises a planar face 11. The length of the body 1 extends between the forward portion 30 and the rearward portion 40, and the upper portion 50 and lower portion 60 of the body 1 converge towards the forward portion 30.

The first side 10 of the body 1 comprises a wing 12, a guiding means 17 and an abutment surface 18.

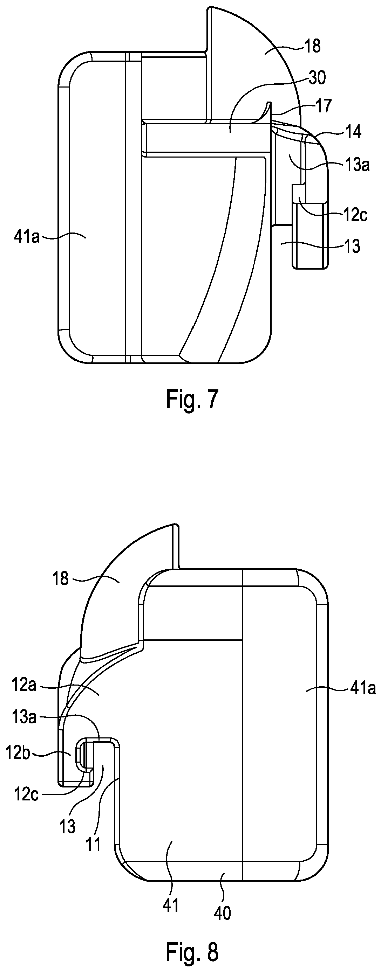

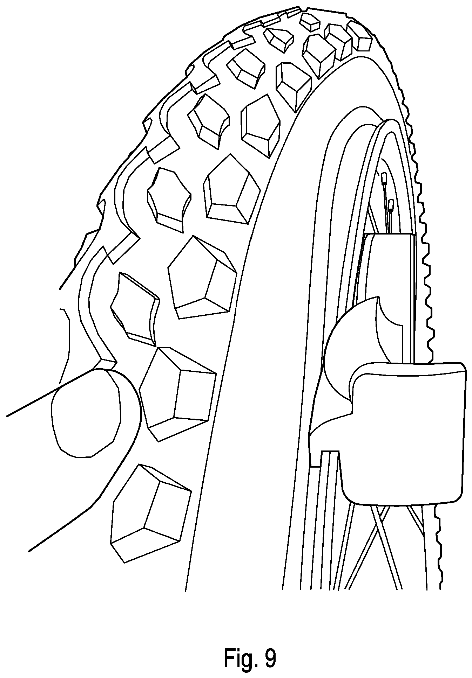

As shown in Figure 8, a first part 12a of the wing 12 extends outwardly from the first side 10 and a second part 12b of the wing 12 extends from the first part 12a in a direction which is substantially parallel with the planar face 11 of the body 1, thereby forming an overhang. The wing 12 and a section of the planar face 11 form a substantially U-shaped open channel 13, as shown in Figures 8 and 9. The inner surface of the wing 12 comprises a lip 12c, which extends towards the planar face 11. The lip 12c extends at least partially along the length of the inner surface of the wing 12 in a direction extending between the forward portion 30 and the rearward portion 40.

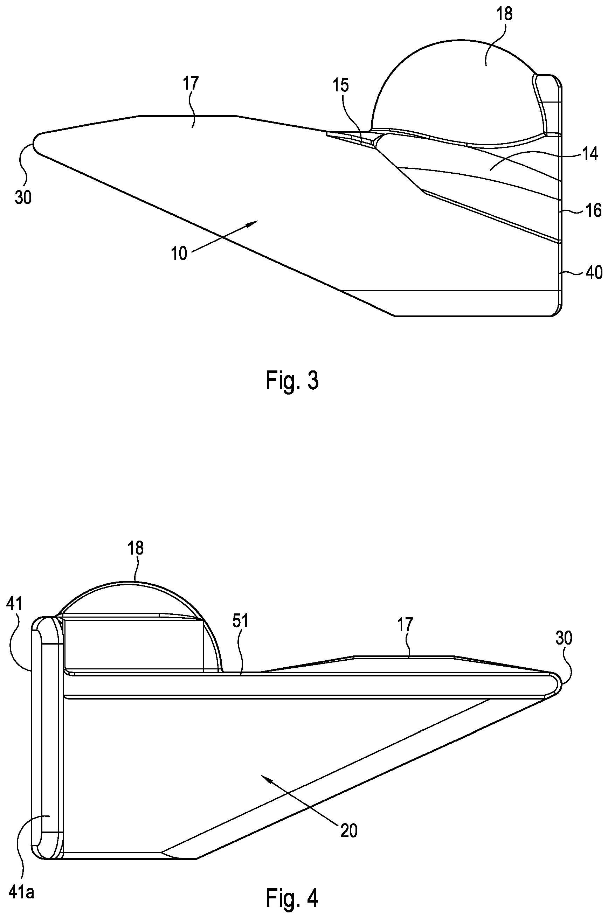

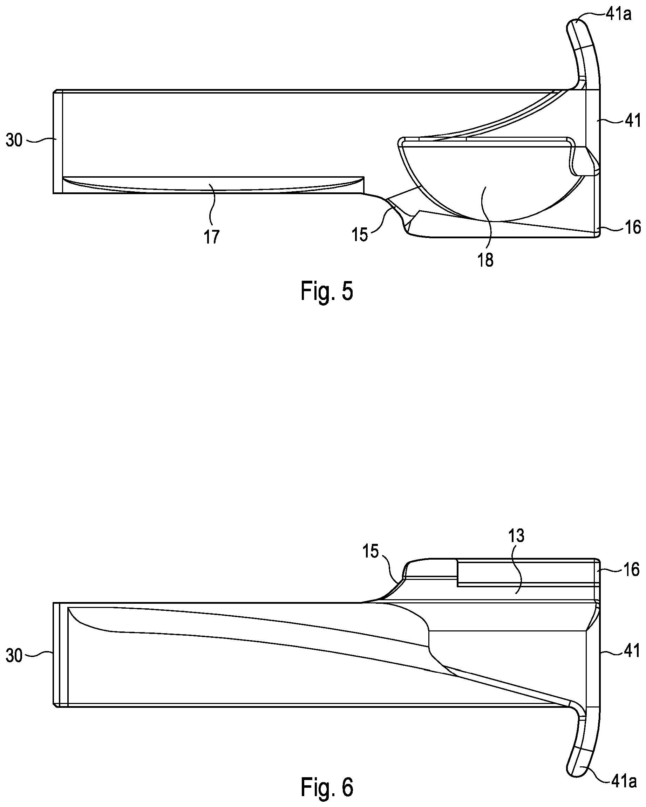

The wing 12 has a leading edge 15 which is proximal to the forward portion 30 of the body 1, as shown in Figures 1 and 7. A trailing edge 16 of the wing 12 is proximal to the rearward portion 40 of the body 1, as shown in Figures 1 and 8. The outer surface 14 of the wing 12 is curved as it extends between the leading edge 15 and the trailing edge 16, as shown in Figure 3. The leading edge 15 of the wing 12 is swept toward the rearward portion of the body, as shown in Figure 5.

An inner surface portion 13a, which forms part of the channel 13, may also be curved between the leading edge 15 and trailing edge 16 of the wing 12 with a radius of curvature similar to or the same as that of the circumference of the wheel rim. Alternatively, the inner surface portion 13a may comprise one linear surface or a series of linear surfaces extending between the leading edge 15 and the trailing edge 16.

The outer surface 14 of the wing 12 is also curved as it extends outwardly from the first side 10 to form a convex surface about an axis which is parallel to an axis extending between the leading edge 15 and the trailing edge 16, as illustrated in Figures 1, 7 and 8. The axis about which the surface is curved may extend substantially along the channel. This radius of curvature of the convex profile of the surface of the outer surface 14 at the leading edge 15 (as shown in Figure 7) is smaller than the radius of curvature of the convex profile at the trailing edge 16 (as shown in Figure 8). The radius of curvature gradually increases from the leading edge 15 to trailing edge 16.

While in the illustrated embodiment the outer surface 14 of the wing 12 is curved, the skilled person will appreciate that other equivalent surface profiles may be used, for example, one of more angled surfaces.

Adjacent to the wing 12 is the guiding means 17, which extends from an upper surface 51 of the body 1 in use. When viewed from the first side 10, the guiding means 17 is tapered in the direction of the forward portion 30 and in the direction of the rearward portion 40 also, forming a ramped protuberance upon the upper portion 50 of the body 1. When viewed from above (as shown in Figure 5), the guiding means has a curved surface. The guiding means 17 is for guiding the side wall of the tyre towards the wheel rim and onto the wing 12 in use.

The abutment surface 18 is for guiding a tyre towards the wheel rim and aligning the tyre with the wing 12 in use. In the illustrated embodiment, the abutment surface 18 comprises a quarter sphere, although it will be understood that any shaped surface which is capable of guiding a tyre towards the wheel rim and aligning the tyre with the wing 12 may be used.

The second side 20 of the body comprises a holding region for holding by a user. The holding region may be used to manipulate the tool 100 in use. In the illustrated embodiment, the holding region comprises both the upper surface 51 of the body 1 and an end section 41 proximate the rearward portion 40 of the body 1. The end section 41 extends substantially perpendicularly to the upper surface. In the illustrated embodiment, the end section 41 also comprises a flange 41a, the width of which extends along the full length of the end section 41. The flange 41a extends from the second side 20 of the body 1. The flange 41a may extend substantially perpendicularly from the second side 20 of the body 1, and/or may form an acute angle with the second side 20, which may be greater than 45 degrees. In a preferred embodiment, the acute angle is greater than 50 degrees, preferably greater than 60 degrees and more preferably greater than 70 degrees. In a preferred embodiment, the width of the flange 41a is 20-60mm, preferably 30-50mm and more preferably 40-50mm.

Use of the invention to install and remove a tyre on a wheel rim will now be described with reference to the illustrated embodiment.

When installing a tyre on a wheel rim a user can usually, without the use of a tool, lift a tyre over a wheel rim wall so that a first side wall of the tyre is wholly seated in the channel of the wheel rim. A section of the second side wall of the tyre may also be lifted over the wheel rim fairly easily and without the use of a tool so that the tyre second side wall is partially installed on the wheel rim. However, once the first side wall and part of the second side wall are installed, it can be difficult if not impossible to lift the remainder of the second side wall over the wheel rim wall without the use of the tool because of the tight fit of the tyre and/or its inflexibility. At this stage, it becomes necessary to employ a tool to install the remainder of the second side wall on the wheel rim.

Once the second side wall is partially installed on a wheel rim, the tool 100 may then be used to lift the bead of the second side wall and corresponding section of the tyre side wall over the wheel rim so that the entirety of the tyre second side wall may be seated in the channel of the wheel rim.

To achieve this, the user orientates the tool 100 so that the first side 10 of the body 1 faces the tyre and the wheel rim, and the second part 12b of the wing 12 extends towards the centre of the wheel. The user inserts the second part 12b between the wheel rim and the tyre second side wall which is already seated in the channel of the wheel rim. The corresponding portion of the wheel rim side wall is therefore located in the channel 13 of the tool 100.

To install the remainder of the second side wall on the wheel rim, the user moves the tool around the wheel rim circumferentially, while maintaining the wheel rim side wall in the channel 13. When the tool 100 of the illustrated embodiment is engaged with the wheel rim as described, the user pushes on the end section 41 to move the tool 100 circumferentially relative to the wheel rim in a clockwise direction (when viewed from the second side 20) towards the section of the tyre second side wall which is not yet installed on the wheel.

As the forward portion 30 engages the uninstalled section of the tyre second side wall, the user continues to move the tool circumferentially so that the guiding means 17 guides the uninstalled section inwardly towards the wheel rim side wall. As the user continues to move the tool circumferentially, the same portion of the uninstalled section engages the abutment surface 18, which further guides the uninstalled section towards the wheel rim and the wing leading edge 15. As the tool continues to move circumferentially around the wheel rim, the tyre bead and side wall of the uninstalled section move over the curved outer surface 14 of the wing 12 and are thereby eased over the side wall of the wheel rim. The user continues to push the tool 100 circumferentially around the wheel rim to feed the tyre bead and side wall onto the wheel rim until the entirety of the tyre second side wall is installed on the wheel rim, as shown in Figure 9.

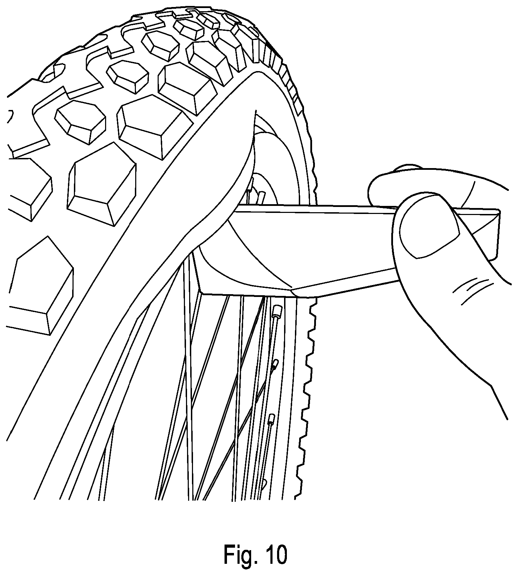

To remove a tyre from a wheel rim, the user pushes the flange 41a underneath part of the tyre bead on one of the side walls of the tyre so that the tyre bead is lifted and the flange 41a is located between the tyre bead and the wheel rim. In this configuration, the flange 41a is therefore located behind the tyre side wall. The user orientates the tool so that the end section 41 is substantially parallel with the corresponding part of the wheel rim outer wall, and in doing so further lifts the tyre bead over and away from the wheel rim, as shown in Figure 10. The tool may then be moved circumferentially around the wheel rim until all of the tyre side wall has been removed from the wheel rim, or until enough of the tyre side wall has been removed for a user to continue to remove the tyre without the use of the tool. The tool may be moved circumferentially in either rotational direction to achieve this.

The end section 41 has a larger surface area than the equivalent lever or hook sections of prior art tyre levers. The orientation of the body 1 relative to the flange 41a also increases the surface area of the tool 100 which is in contact with the wheel rim, and particularly with the flat outer side wall of the wheel rim, compared to the known prior art.

These features may provide the advantage of spreading the force exerted by the tool 100 across a larger surface area of the wheel rim and avoiding putting undue pressure on the outermost edge of the wheel rim, thereby making it easier to move the tool 100 circumferentially around the wheel rim in use and avoiding damage to wheel rim.

When a sufficient proportion of the tyre side wall has been removed from the wheel rim, a user may choose to remove the remainder of the tyre from the wheel rim without using the tool.

While the illustrated embodiment comprises the features required for installing a tyre on wheel rim and the features required for removing a tyre from a wheel rim, the tool may comprise only the features required for installing the tyre or only the features required for removing the tyre.

## Claims

1. A tool (100) for installing a bicycle tyre on a wheel rim and removing a bicycle tyre from a wheel rim, the tool comprising:
a body (1);
a wing (12) extending from an upper portion of the body (1) to form an overhang over a side (10) of the body (1), such that the side of the body (1) and an underside of the wing (12) form an open channel (13) for receiving in use an outer peripheral portion of a wall of the wheel rim, the channel (13) extending between a forward portion (30) and a rearward portion (40) of the body (1);
the wing (12) comprising a leading edge (15) and an upper side which are arranged to engage in use with a side wall of the tyre;
wherein the leading edge (15) of the wing (12) is swept toward the rearward portion (40) of the body (1) and the upper side of the wing (12) is curved about an axis which extends substantially along the channel (13), to form a convex profile, **characterised in that** the tool further comprises a flange (41a) for removal of a tyre from a wheel rim, wherein the flange (41a) extends substantially perpendicularly to the body (1).

2. A tool according to claim 1, wherein a radius of curvature of the upper side of the wing (12) about the axis increases from the leading edge (15) toward a trailing edge (16) of the wing (12).

3. A tool according to claim 1 or claim 2 further comprising guiding means (17) disposed upon the upper portion (50) of the body (1) for guiding the side wall of the tyre upon the wing (12).

4. A tool according to claim 3, wherein the guiding means (17) is disposed along the body (1) between the wing (12) and the forward portion (30) of the body (1).

5. A tool according to claim 3 or 4 wherein the guiding means (17) comprises a ramped protuberance formed upon the upper portion for lifting the side wall of the tyre upon the wing.

6. A tool according to any preceding claim further comprising an abutment surface (18) for engaging with the side wall of the tyre and deflecting the side wall of the tyre upon the upper side of the wing.

7. A tool according to claim 6 wherein the abutment surface (18) comprises a quarter sphere.

8. A tool according to claim 1 wherein the flange (41a) extends from the side of the body (1) opposite the side from which the wing (12) extends.

9. A tool according to claim 1 or claim 8 wherein the flange (41a) is located proximate the rearward portion (40) of the body (1).

10. A tool according to any of claims 1, 8 or 9, wherein the flange (41a) extends between the upper portion (50) and a lower portion (60) of the body (1).

11. A tool according to any of claims 1 or 8-10 wherein the width of the flange (41a) is 20-60mm.

12. A tool according to claim 11 wherein the width of the flange (41a) extending between the upper (50) and lower portion (40) of the body (1) is 30-50mm.

13. A tool according to claim 12 wherein the width of the flange (41a) extending between the upper (50) and lower portion (40) of the body (1) is 40-50mm.

## Patentansprüche

1. Werkzeug (100) zum Montieren eines Fahrradreifens auf einer Radfelge und zum Abnehmen eines Fahrradreifens von einer Radfelge, das Werkzeug umfassend:
einen Körper (1);
einen Flügel (12), der sich von einem oberen Abschnitt des Körpers (1) erstreckt, um einen Überhang über eine Seite (10) des Körpers (1) derart auszubilden, dass die Seite des Körpers (1) und eine Unterseite des Flügels (12) einen offenen Kanal (13) zum Aufnehmen, in Verwendung, eines Außenumfangsabschnitts einer Wand der Radfelge ausbilden, wobei sich der Kanal (13) zwischen einem vorderen Abschnitt (30) und einem hinteren Abschnitt (40) des Körpers (1) erstreckt;
der Flügel (12) umfassend eine Vorderkante (15) und eine Oberseite, die arrangiert sind, um, in Verwendung, eine Seitenwand des Reifens in Eingriff zu nehmen;
wobei die Vorderkante (15) des Flügels (12) in Richtung des hinteren Abschnitts (40) des Körpers (1) gebogen ist und die Oberseite des Flügels (12) um eine Achse, die sich im Wesentlichen entlang des Kanals (13) erstreckt, gekrümmt ist, um ein konvexes Profil auszubilden, **dadurch gekennzeichnet, dass** das Werkzeug ferner einen Flansch (41a) für eine Abnahme eines Reifens von einer Radfelge umfasst, wobei sich der Flansch (41a) im Wesentlichen zu dem Körper (1) senkrecht erstreckt.

2. Werkzeug nach Anspruch 1, wobei ein Krümmungsradius der Oberseite des Flügels (12) um die Achse von der Vorderkante (15) in Richtung einer Hinterkante (16) des Flügels (12) zunimmt.

3. Werkzeug nach Anspruch 1 oder 2, ferner umfassend ein Führungsmittel (17), das auf dem oberen Abschnitt (50) des Körpers (1) zum Führen der Seitenwand des Reifens auf den Flügel (12) angeordnet ist.

4. Werkzeug nach Anspruch 3, wobei das Führungsmittel (17) entlang des Körpers (1) zwischen dem Flügel (12) und dem vorderen Abschnitt (30) des Körpers (1) angeordnet ist.

5. Werkzeug nach Anspruch 3 oder 4, wobei das Führungsmittel (17) eine rampenförmige Erhebung, die auf dem oberen Abschnitt zum Anheben der Seitenwand des Reifens auf den Flügel ausgebildet ist, umfasst.

6. Werkzeug nach einem der vorstehenden Ansprüche, ferner umfassend eine Anlageoberfläche (18) zum Ineingriffnehmen der Seitenwand des Reifens und zum Auslenken der Seitenwand des Reifens auf die Oberseite des Flügels.

7. Werkzeug nach Anspruch 6, wobei die Anlageoberfläche (18) eine Viertelkugel umfasst.

8. Werkzeug nach Anspruch 1, wobei sich der Flansch (41a) von der Seite des Körpers (1) gegenüber der Seite erstreckt, von der sich der Flügel (12) erstreckt.

9. Werkzeug nach Anspruch 1 oder 8, wobei sich der Flansch (41a) nahe dem hinteren Abschnitt (40) des Körpers (1) befindet.

10. Werkzeug nach einem der Ansprüche 1, 8 oder 9, wobei sich der Flansch (41a) zwischen dem oberen Abschnitt (50) und einem unteren Abschnitt (60) des Körpers (1) erstreckt.

11. Werkzeug nach einem der Ansprüche 1 oder 8 bis 10, wobei die Breite des Flansches (41a) 20-60 mm beträgt.

12. Werkzeug nach Anspruch 11, wobei die Breite des Flansches (41a), der sich zwischen dem oberen (50) und dem unteren Abschnitt (40) des Körpers (1) erstreckt, 30-50 mm beträgt.

13. Werkzeug nach Anspruch 12, wobei die Breite des Flansches (41a), der sich zwischen dem oberen (50) und dem unteren Abschnitt (40) des Körpers (1) erstreckt, 40-50 mm beträgt.

## Revendications

1. Outil (100) permettant d'installer un pneu de bicyclette sur une jante et de retirer un pneu de bicyclette d'une jante, l'outil comprenant :
un corps (1) ;
une aile (12) s'étendant à partir d'une partie supérieure du corps (1) pour former une saillie sur un côté (10) du corps (1), de telle sorte que le côté du corps (1) et un côté inférieur de l'aile (12) forment un canal ouvert (13) pour recevoir, en cours d'utilisation, une partie périphérique extérieure d'une paroi de la jante, le canal (13) s'étendant entre une partie avant (30) et une partie arrière (40) du corps (1) ;
l'aile (12) comprenant un bord d'attaque (15) et un côté supérieur qui sont conçus pour venir en prise, en cours d'utilisation, dans un flanc du pneu ;
dans lequel le bord d'attaque (15) de l'aile (12) est balayé vers la partie arrière (40) du corps (1) et le côté supérieur de l'aile (12) est incurvé autour d'un axe qui s'étend sensiblement le long du canal (13), pour former un profil convexe,
**caractérisé en ce que** l'outil comprend en outre une bride (41a) pour un retrait d'un pneu d'une jante, dans lequel la bride (41a) s'étend sensiblement perpendiculairement au corps (1).

2. Outil selon la revendication 1, dans lequel un rayon de courbure du côté supérieur de l'aile (12) autour de l'axe augmente du bord d'attaque (15) vers le bord de fuite (16) de l'aile (12).

3. Outil selon la revendication 1 ou la revendication 2, comprenant en outre un moyen de guidage (17) disposé sur la partie supérieure (50) du corps (1) pour guider le flanc du pneu sur l'aile (12).

4. Outil selon la revendication 3, dans lequel le moyen de guidage (17) est disposé le long du corps (1) entre l'aile (12) et la partie avant (30) du corps (1).

5. Outil selon la revendication 3 ou 4, dans lequel le moyen de guidage (17) comprend une protubérance en forme de rampe formée sur la partie supérieure pour soulever le flanc du pneu sur l'aile.

6. Outil selon l'une quelconque des revendications précédentes, comprenant en outre une surface de butée (18) pour venir en prise dans le flanc du pneu et faire dévier le flanc du pneu sur le côté supérieur de l'aile.

7. Outil selon la revendication 6, dans lequel la surface de butée (18) comprend un quart de sphère.

8. Outil selon la revendication 1, dans lequel la bride (41a) s'étend du côté du corps (1) opposé au côté à partir duquel l'aile (12) s'étend.

9. Outil selon la revendication 1 ou la revendication 8, dans lequel la bride (41a) est située à proximité de la partie arrière (40) du corps (1).

10. Outil selon l'une quelconque des revendications 1, 8 ou 9, dans lequel la bride (41a) s'étend entre la partie supérieure (50) et la partie inférieure (60) du corps (1).

11. Outil selon l'une quelconque des revendications 1 ou 8 à 10, dans lequel la largeur de la bride (41a) est de 20 à 60 mm.

12. Outil selon la revendication 11, dans lequel la largeur de la bride (41a) s'étendant entre la partie supérieure (50) et la partie inférieure (40) du corps (1) est de 30 à 50 mm.

13. Outil selon la revendication 12, dans lequel la largeur de la bride (41a) s'étendant entre la partie supérieure (50) et la partie inférieure (40) du corps (1) est de 40 à 50 mm.
